# EUROPEAN PATENT SPECIFICATION

(11) **EP 0 985 600 B1**
(45) Date of publication and mention of the grant of the patent: **15.05.2002**
(21) Application number: 99116977.2
(22) Date of filing: 27.08.1999
(51) Int. Cl.: B62M 23/02, B62K 11/04, B62J 11/00

(54) **Battery mounting structure for vehicle**
Anordnung zum Einbau von Batterien in Motorrädern
Structure de montage d'une batterie pour motocyclette

(30) Priority: 10.09.1998 JP 25732698
(43) Date of publication of application: 15.03.2000
(73) Proprietor: HONDA GIKEN KOGYO KABUSHIKI KAISHA, Minato-ku Tokyo (JP)
(72) Inventor: Yanagida, Takayuki, c/o KK Honda Gijutsu Kenkyusho, Wako-shi, Saitama (JP); Suzuki, Tetsuo, c/o KK Honda Gijutsu Kenkyusho, Wako-shi, Saitama (JP); Hori, Masayoshi, c/o KK Honda Gijutsu Kenkyusho, Wako-shi, Saitama (JP); Yamaguchi, Masaaki, c/o KK Honda Gijutsu Kenkyusho, Wako-shi, Saitama (JP)
(74) Representative: Liska, Horst, Dr.-Ing.

(56) References cited:
- FR-A- 2 738 539
- US-A- 4 444 856

## Description

### Detailed Description of the Invention

### Technical Field of the Invention

The present invention relates to a battery mounting structure for a vehicle such as a motorcycle or a four-wheeled buggy.

### Related Art

According to a conventional mounting structure for mounting a battery case to a vehicle body frame, a stay is extended from the vehicle body frame side and the battery case is bolted to the stay (see, for example, Japanese Examined Patent Publication No. Sho 62-41146 and US-A-4 444 856.

Also known are a conventional structure wherein a battery case also serves as a fuel pump support base (Japanese Examined Patent Publication No. Sho 58-75183) and a conventional structure wherein a battery case is fixed by a seat from above (Japanese Examined Patent Publication No. Hei 7-251775).

### Problem to be Solved by the Invention

In the above conventional structure wherein the battery case is fixed with bolts, additional working time and labor are required for mounting a stay to the vehicle body frame and for fixing the battery case with bolts, so it has been desired to diminish such additional working time and labor.

This is also true of the case where another component is to be supported by the battery case. It is an object of the present application to meet the aforesaid demand.

### Means for Solving the Problem.

In order to solve the above-mentioned problem, the invention in the present application resides in a battery mounting structure for a vehicle for mounting a battery case to a vehicle body frame, characterized in that the vehicle body frame has a pair of front and rear cross portions extending in the transverse direction of the vehicle, and the battery case has front and rear mounting portions, one of the front and rear mounting portions pinching the corresponding cross portion so that the battery case is pivotable, and the other mounting portion being retained onto the other cross portion.

The second aspect of the present invention, is characterized in that the retained mounting portion is pressed down by means of a buffer member attached to a bottom plate of a seat.

The third aspect of the present invention, is characterized in that a liquid tank is suspended from a lower portion of the battery case, the liquid tank being held in a longitudinally sandwiched manner between a part of the vehicle body frame and a part of the battery case.

### Effect of the Invention

According to the invention, one of the front and rear mounting portions of the battery case pinches the corresponding cross portion so that the battery case is pivotable about the cross portion, and the other mounting portion is retained onto the other cross portior. Thus, the battery can be mounted without the need of using bolts. Consequently, it is no longer required that a stay be provided beforehand on the vehicle body frame side, thus making it possible to greatly reduce the time and labor required for mounting the battery case.

According to the second aspect, since a buffer member of a seat is pushed against the upper surface of the mounting portion retained onto the corresponding cross portion, the mounting portion can be fixed firmly between the seat and the cross portion which is a part of the vehicle body frame.

According to the third aspect, since a liquid tank suspended from a lower portion of the battery case is held in a longitudinally sandwiched manner between a part of the vehicle body frame and a part of the battery case at the time of mounting of the battery case, the liquid tank can be installed for the battery case and the vehicle body frame with less time and labor.

### Mode for Carrying Out the Invention

An embodiment of the present invention will be described below with reference to the accompanying drawings.

### Brief Description of the Drawings

Fig. 1 is a side view showing a mounted state of a battery case;
Fig. 2 is a top view thereof; and

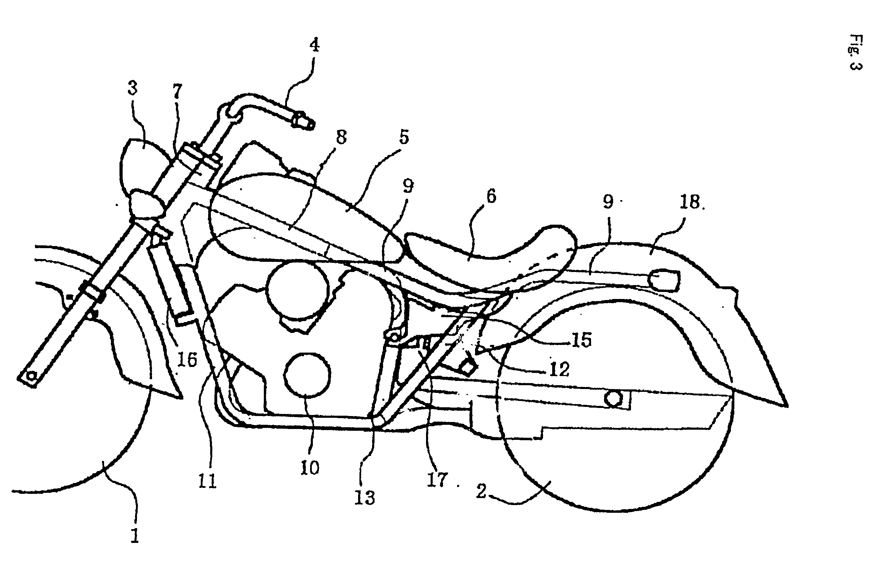

Fig. 3 is a side view of a motorcycle with an embodiment of the invention applied thereto.

The motorcycle in question, which is constituted as an American type, comprises front and rear wheels 1, 2, of a long wheel base, a cannon ball-shaped headlight 3, an up-handle 4, a teardrop type fuel tank 5, and a low deck seat 6.

A vehicle body frame comprises a backbone frame 8 extending backward from a head pipe 7 and bent downward and extending from near the rear end portion of the teardrop type fuel tank 5, a pair of right and left seat rails 9 extending backward from near the bent portion of the backbone frame 8, a pair of right and left rear frames 11 extending obliquely downward from a lower portion of the head pipe 7, then curving in front of a V-shaped engine 10 and further extending horizontally backward along the underside of the engine, and a pair of right and left stays 12 extending backward in a contiguously integral manner from rear end portions of the rear frames 11.

A cross frame 13 is disposed between the rear end portions of the right and left rear frames 11 and a lower end portion of the backbone frame 8 is connected to an intermediate part of the cross frame 13.

A battery case 15 is disposed within a space which is surrounded with the backbone frame 8, seat rails 9 and rear stays 12 and which is generally triangular in side view, with a reservoir tank 17 for a radiator 16 being suspended below the battery case 15. The reference numeral 18 in the figure denotes a rear fender.

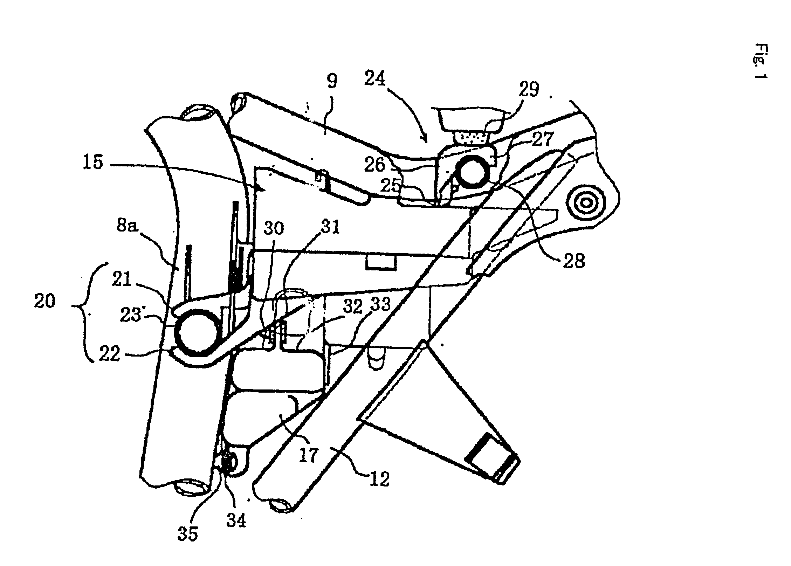

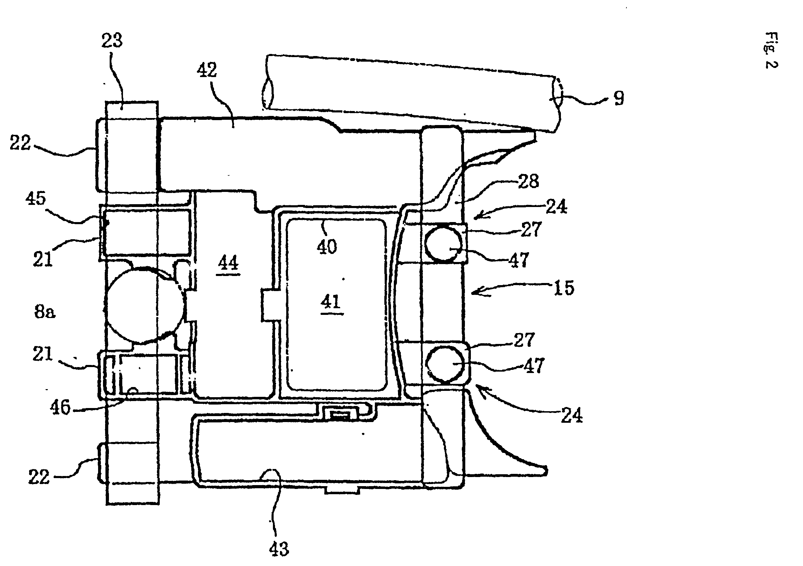

The details of the battery case will now be described. As shown in Figs.1 and 2, the battery case 15 is in the shape of a box which is open upward. Pinching portions 20 projecting forward are integral with the front portion of the battery case 15, the pinching portion 20 being spaced from each other in the transverse direction of the vehicle.

One pinching portion 20 is constituted by a combination of an upper projection 21 and a lower projection 22. The projections 21 and 22 are formed in a mutually deviated relation in the transverse direction and pinch a front cross pipe 23 vertically therebetween, the front cross pipe 23 extending transversely through a down portion 8a which is a part of the backbone frame 8.

On the other hand, above the rear end portion of the battery case 15 are integrally formed a pair of right and left retaining portions 24.

The retaining portions 24, which are each in a generally inverted L shape, each have an upright portion 26 connected to the body side of the battery case 15 through a thin-walled portion 25 and an upper portion 27 extending backward at an angle of about 90° from the upper portion of the upright portion 26.

The upper portion 27 is put on a rear-side cross pipe 28 which connect the right and left seat rails 9 with each other. The contact area of the upper portion 27 with the cross pipe 28 is in the shape of a concavely curved surface, and a lower end portion of a buffer member 29 attached to a bottom plate of the seat 6 and formed of rubber or the like is pushed against the upper surface of the upper portion 27 from above.

An engaging pin 30 projecting forward is integral with the bottom of the battery case 15 at a front position and a stay 32, which is integral through rubber 31 with the upper portion of the reservoir tank 17 is mounted to the engaging pin 30 by insertion from the front side, whereby the reservoir tank 17 is suspended.

At this time, the rear portion of the reservoir tank 17 is brought into abutment with a stopper rib 33 which projects downward integrally from the bottom of the battery case 15.

A downwardly projecting stay 34 is integral with the lower portion of the reservoir tank 17 and a stopper cushion 35 such as rubber is attached to the stay 34 so as to project to the front side.

When the battery case 15 is mounted to the vehicle body frame, the stopper cushion 35 comes into elastic abutment with the down portion 8a.

As shown in Fig. 2, the interior of the battery case 15 is partitioned to form a battery receptacle portion 41 to receive a battery 40 therein. The right-hand side portion of the vehicle body is partitioned to form a fuse box 42 and the left-hand side portion thereof is also partitioned to form a tool container portion 43.

A compartment formed in front of the battery receptacle portion 41 serves as a unit receptacle portion 44, in which are received various electric units.

Further, a turn signal lamp relay receptacle portion 45 is formed on the upper surface of the upper projection 21 located on the right-hand side of the vehicle body, while a switch receptacle portion 46 for various switches is formed on the upper surface of the upper projection 21 located on the left-hand side of the vehicle body. The numeral 47 on each upper portion 27 denotes an abutment part of the buffer member 29.

The operation of this embodiment will now be described. First, for mounting the battery case 15 to the vehicle body frame, the reservoir tank 17 is brought into engagement with the engaging pin 30 from the front side through rubber 31 and stay 32 and is suspended thereby.

In this case, the battery case 15 is put from the rear side into the space defined by the right and left seat rails 9 and the rear stays 12, and the upper and lower projections 21, 22 are deformed elastically to pinch the front cross pipe 23.

In this state the battery case 15 is pivotable about the front cross pipe 23. The rear side of the battery case is pivotally moved counterclockwise, allowing the retaining portions 24 to undergo an elastic deformation and move forward from below the rear cross pipe 28, and then the rear side of the battery case is pivotally moved a little in the opposite direction. The upper portions 27 get on the rear cross pipe 28 and are retained thereon. In this case, since the retaining portions 24 are each connected to the body side of the battery case 15 through the thin-walled portion 25, an elastic deformation of this portion permits the above pivotal movement.

Thereafter, the seat 6 is fixed by locking for example, whereby the battery case 15 is fixed between the seat 6 and the vehicle body frame. At this time, positioning of the battery case is effected by both front and rear cross pipes 23, 28 in the longitudinal direction and by both right and left rear stays 12 in the transverse direction..

An upward movement of the battery case 15 is stopped by the lower projections 22 and buffer member 29, while a downward movement thereof is stopped by the upper projections 21 and the rear cross pipe 28. Thus, unlike the prior art, the use of bolts is not needed at all, nor is it necessary to provide a battery case mounting stay on the vehicle body frame side, permitting a great reduction of the time and labor required for the battery case mounting work.

Besides, the reservoir tank 17 is merely engaged with the engaging pin 30 of the battery case 15. In this case, when the battery case 15 is mounted to the vehicle body frame, the stopper cushion 35 attached to the lower portion of the reservoir tank 17 is pushed against the down portion 8a to effect positioning of the reservoir tank on the front side, while positioning of the same tank on the rear side is effected by the stopper rib 33 of the battery case 15. Thus, also in this case, the use of bolts is not needed at all and the reservoir tank can be supported reliably.

The present invention is not limited to the above embodiment, but various modifications may be made. For example, the pinching portions 20 and the retaining portions 24 may be replaced with each other in their front-rear relation. Further, the reservoir tank 17 may be substituted by another liquid tank such as an oil tank.

The material of the buffer member 29 and stopper cushion 35 is not limited to rubber. Another elastic material such as resin may be used.

## Claims

1. A battery mounting structure for a vehicle for mounting a battery case (15) to a vehicle body frame, **characterized in that** said vehicle body frame has a pair of front and rear cross portions (23, 28) extending in the transverse direction of the vehicle, and said battery case (15) has front and rear mounting portions (21, 22, 27), one of said front and rear mounting portions (21, 22, 27) pinching the corresponding cross portion (23, 28) so that the battery case (15) is pivotable, and the other mounting portion (21, 22, 27) being retained onto the other cross portion (23, 28).

2. A battery mounting structure for a vehicle according to claim 1, wherein an upper surface of the retained mounting portion (27) is pressed down by means of a buffer member (29) attached to a bottom plate of a seat (6).

3. A battery mounting structure for a vehicle according to claim 1, wherein a liquid tank (17) is suspended from a lower portion of said battery case (15), said liquid tank (17) being held in a longitudinally sandwiched manner between a part of said vehicle body frame and a part of said battery case (15).

## Patentansprüche

1. Batteriemontagestruktur für ein Fahrzeug zum Montieren eines Batteriegehäuses (15) an einem Fahrzeugkarosserierahmen, **dadurch gekennzeichnet, daß** der Fahrzeugkarosserierahmen ein Paar vordere und hintere Querabschnitte (23, 28) aufweist, die sich in Querrichtung des Fahrzeugs erstrecken, wobei das Batteriegehäuse (15) vordere und hintere Montageabschnitte (21, 22, 27) umfaßt, und wobei einer der vorderen und hinteren Montageabschnitte (21, 22, 27) den entsprechenden Querabschnitt (23, 23) klemmt, so daß das Batteriegehäuse (15) schwenkbar ist, während der andere Montageabschnitt (21, 22, 27) auf dem anderen Querabschnitt (23, 28) gehalten wird.

2. Batteriemontagestruktur für ein Fahrzeug nach Anspruch 1, bei der eine obere Oberfläche des gehaltenen Montageabschnitts (27) mittels eines Pufferelements (29) nach unten gedrückt wird, das an einer Bodenplatte eines Sitzes (6) angebracht ist.

3. Batteriemontagestruktur für ein Fahrzeug nach Anspruch 1, bei dem ein Flüssigkeitstank (17) an einem unteren Abschnitt des Batteriegehäuses (15) hängt, wobei der Flüssigkeitstank (17) in Längsrichtung sandwich-artig zwischen einem Teil des Fahrzeugkarosserierahmens und einem Teil des Batteriegehäuses (15) gehalten wird.

## Revendications

1. Structure de montage de batterie pour un véhicule, destinée à monter un boîtier de batterie (15) sur un châssis de carrosserie de véhicule, **caractérisée en ce que** ledit châssis de carrosserie de véhicule a une paire de parties transversales avant et arrière (23, 28) s'étendant dans la direction transversale du véhicule, et ledit boîtier de batterie (15) a des parties de montage avant et arrière (21, 22, 27), une desdites parties de montage avant et arrière (21, 22, 27) pinçant la partie transversale correspondante (23, 28) de sorte que le boîtier de batterie (15) peut pivoter, et l'autre partie de montage (21, 22, 27) étant retenue sur l'autre partie transversale (23, 28).

2. Structure de montage de batterie de véhicule selon la revendication 1, dans laquelle une surface supérieure de la partie de montage retenue (27) est pressée vers le bas au moyen d'un élément formant tempon (29) fixé à une plaque inférieure d'un siège (6).

3. Structure de montage de batterie de véhicule selon la revendication 1, dans laquelle un réservoir de liquide (17) est suspendu à partir d'une partie inférieure dudit boîtier de batterie (15), ledit réservoir de liquida (17) étant maintenu de manière enserrée longitudinalement entre une partie dudit châssis de carrosserie de véhicule et une partie dudit boîtier de batterie (15).
